# EUROPEAN PATENT APPLICATION

(11) **EP 4 729 408 A1**
(43) Date of publication of application: **22.04.2026**
(21) Application number: 24206832.8
(22) Date of filing: 16.10.2024
(51) Int. Cl.: B64C 1/06, B64D 7/00

(54) **AIRCRAFT FUSELAGE, BALLISTIC SHIELD FOR USE ON AN INNER SURFACE OF AN AIRCRAFT FUSELAGE, BALLISTIC SHIELD ASSEMBLY AND AIRCRAFT HAVING A FUSELAGE**

(71) Applicant: AIRBUS Operations GmbH, 21129 Hamburg (DE)
(72) Inventor: Schweers, Manuel, 21129 Hamburg (DE); Konitzer, Peer, 21129 Hamburg (DE)

(57) **Abstract**

The present invention provides Aircraft fuselage (100), in particular of an open fan propeller aircraft (400), comprising a primary structure having frame (105) members extending in a circumferential direction (C) of the fuselage (100) and stringers (111) extending in a longitudinal direction (A) of the fuselage (100) and a ballistic shield (101) covering an inner surface of a longitudinal section (123) of the fuselage, wherein the ballistic shield (101) is inserted between adjacent frame (105) members of the primary structure and extends in a longitudinal direction (A) and a circumferential direction (C) of the fuselage (100) section, a ballistic shield (101) for use on an inner surface (103) of an aircraft fuselage (100), a ballistic shield (101) assembly and aircraft (400)..

## Description

The present invention pertains to an aircraft fuselage, a ballistic shield for use on an inner surface of an aircraft fuselage, a ballistic shield assembly and an aircraft having a fuselage.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft or other installation environments.

In particular in open fan propeller aircraft, a ballistic shield is a protective component positioned on the fuselage near or around the location of the propeller or rotor blades. The primary purpose of the ballistic shield is to enhance safety by protecting the fuselage, critical aircraft systems, and passengers from potential damage caused by blade fragments or debris in the event of a blade-off or fan-blade failure incident or from ice shedding or ice fall from the blades. The ballistic shield acts as a protective barrier to absorb or deflect debris from the rotor or propeller blades if they fail or break off during flight or chunks of ice flung from the rotating blades and prevent the fuselage from being penetrated by the latter. In an open fan propeller aircraft, the engines are typically mounted either on the wings or at the rear of the fuselage. The ballistic shield is placed on the fuselage, ahead of or in line with the propeller disc to block any debris or ice from impacting the aircraft body. Ballistic shields are usually mounted on an outer surface of an aircraft fuselage, which has implications for both fuselage design and aerodynamic performance.

Against this background, it is an object of the present invention to find an aircraft fuselage provided with a ballistic shield in specific sections of the fuselage requiring ballistic protection with the ballistic shield not effecting drag and aerodynamics of the fuselage and facilitating fuselage assembly.

This object is achieved by an aircraft fuselage having the features of claim 1, a ballistic shield having the features of claim 10, a ballistic shield assembly having the features of claim 13 and an aircraft having the features of claim 14.

According to a first aspect of the invention, an aircraft fuselage, in particular of an open fan propeller aircraft, comprising a primary structure having frame members extending in a circumferential direction of the fuselage and stringers extending in a longitudinal direction of the fuselage and a ballistic shield covering an inner surface of a longitudinal section of the fuselage is provided, wherein the ballistic shield is inserted between adjacent frame members of the primary structure and extends in a longitudinal and a circumferential direction of the fuselage section. This has the advantage that the internally mounted ballistic shield reduces drag and weight and improves aerodynamics of the fuselage, since the outer design of the fuselage is not altered. By integrating the ballistic shield between adjacent frame members of the primary fuselage structure, the shield is seamlessly incorporated inside the fuselage without requiring significant modifications to the existing load-bearing elements. This approach ensures that the primary structural integrity of the fuselage is maintained while providing enhanced protection. The longitudinal and circumferential extension of the shield ensures that a large section of the fuselage is protected from potential threats such as propeller debris, ice shedding, or other high-velocity fragments, thereby enhancing the overall safety of the aircraft. Since the ballistic shield is mounted on the inner surface of the fuselage, it does not disrupt the aerodynamic profile of the aircraft fuselage. The internal placement prevents any increase in drag or other aerodynamic penalties that could result from external shield installations. The placement of the ballistic shield between adjacent frame members furthermore allows for efficient use of internal space without adding unnecessary bulk or weight to the outer fuselage. This design optimizes the weight distribution while still providing high levels of protection. The use of the existing frame members as structural supports for the shield eliminates the need for additional reinforcements, minimizing the overall weight impact on the fuselage. The integration of the ballistic shield into the existing frame and stringer structure has the further advantage that it facilitates manufacturing, as the shield can be installed during the standard assembly process of the fuselage. Additionally, since the ballistic shield is located on the inner surface of the fuselage, it is readily accessible during maintenance or inspection procedures. This leads to simplified repair and replacement procedures, reducing downtime and maintenance costs. The design of the shield, extending in both the longitudinal and circumferential directions of the fuselage, provides coverage of specific sections of the fuselage. This ensures that protection is provided across a wide area, reducing the risk of damage to both the aircraft's primary structure and vital systems located within the fuselage in the event of a ballistic impact or debris strike. By positioning the ballistic shield within the frame members and stringers, the shield works in concert with the fuselage's primary load-bearing structure. The shield can potentially contribute to the stiffness and strength of the fuselage, especially in regions vulnerable to high impacts, further enhancing the durability of the aircraft without the need for extensive structural redesigns.

A further aspect of the invention lies in a ballistic shield for use on an inner surface of an aircraft fuselage according to the invention, wherein the ballistic shield is configured as a rectangular plate with profiled rails, in particular U-profiled rails being provided at at least two opposing edges of the plate or the ballistic shield. This provides advantages in terms of structural integration, ease of installation, and flexibility for providing ballistic protection on the inner surface of the aircraft fuselage. The U-profiled rails along the opposing edges of the ballistic shield plate provide a simple and efficient mechanism for mounting the shield onto the frames of the primary structure of the fuselage allowing for quick and secure installation. This design simplifies the assembly process during manufacturing and also facilitates maintenance, as the plates can be easily removed and replaced without requiring significant disassembly of other fuselage or primary structure components. The U-profiled rails provide additional rigidity to the rectangular ballistic shield plate, ensuring that the shield maintains its shape and structural integrity even under high-impact forces. The profile of the rails also enhances the shield's attachment stability within the fuselage, reducing the risk of dislodgement or movement during flight or in the event of high stress, thus providing consistent and reliable protection. The rectangular shape of the ballistic shield allows for a modular design, enabling multiple plates to be installed side by side to cover larger areas of the fuselage interior. This modularity provides flexibility in configuring the shield coverage based on the specific protective needs of different fuselage sections. Different sizes of rectangular plates can be manufactured and installed in various sections of the fuselage, offering customizable protection while maintaining a standard design for integration. The compact, rectangular design of the shield plates, coupled with the U-profiled rails, allows for efficient use of the available space within the fuselage. The shield can be tightly integrated with the internal structure without occupying excessive space. The U-profiled rails also contribute to improved load distribution across the edges of the ballistic shield plate.

A further aspect of the invention lies in a ballistic shield assembly comprising a plurality of ballistic shields, wherein the ballistic shields are arranged adjacent to each other and connected via connection means provided in edges of the ballistic shields facing each other. This advantages with respect to modularity, flexibility, ease of installation, and enhanced protection. The configuration ballistic shield assembly allows for design that can be efficiently adapted to various fuselage shapes and sizes, while maintaining a high degree of protection and structural integrity. The arrangement of individual ballistic shields adjacent to each other, connected via connection means at their edges, enables the assembly to be highly modular. This modular design allows for the creation of a customizable shield coverage based on the specific size and shape of the fuselage section to be protected. By using multiple smaller shields, the assembly can be easily scaled to cover large or irregularly shaped fuselage areas, ensuring full protection without the need for a single large shield, which could be difficult to manufacture or install. The use of connection means at the edges of the shields allows for quick and secure assembly of the ballistic shields. These connection means, such as interlocking profiles, fasteners, or clips, provide simple installation procedures, reducing assembly time and complexity. In the event that one ballistic shield is damaged or requires replacement, the modular nature of the assembly allows for the removal and replacement of individual shields without having to disassemble the entire system. This simplifies maintenance and reduces repair costs and downtime. The connection means between the adjacent ballistic shields provide additional structural stability to the overall assembly. By linking the shields together, the load from impacts is distributed across multiple shields rather than being concentrated on a single one. This load-sharing effect reduces the likelihood of structural failure and enhances the overall durability of the ballistic shield assembly. Additionally, the interconnected shields form a continuous protective barrier, minimizing any potential gaps between shields that could weaken the overall protection. The ability to connect multiple ballistic shields together allows the assembly to adapt to various fuselage geometries. Whether the fuselage has curved, angled, or flat sections, the individual shields can be arranged to fit the contours of the aircraft fuselage structure. This flexibility ensures that the ballistic shield assembly can be used in different aircraft designs, making it a versatile solution for various fuselage configurations without the need for custom-built shields for each application. The connection means not only secure the individual shields but also improve the impact resistance of the overall assembly. By linking the shields, the assembly can withstand higher forces by spreading the impact across multiple shields, providing redundancy in the event of a direct hit or debris strike. The design of multiple smaller ballistic shields that can be connected simplifies the manufacturing process. Instead of producing a single large, complex shield, manufacturers can create standardized shield units that are easier to produce, inspect, and transport.

A further aspect of the invention lies in an aircraft having a fuselage, wherein the aircraft is a propeller aircraft, in particular an open fan propeller aircraft or turboprop aircraft, and wherein the ballistic shield is positioned on the inner surface of the fuselage in a section of the fuselage adjacent to the propeller. This has the advantage that positioning the ballistic shield in the fuselage segment adjacent to the propeller directly addresses the areas most vulnerable to propeller-related incidents, such as blade-off events, ice shedding, or other debris impacts. This targeted protection provides a high level of safety for passengers, crew, and critical systems in this high-risk area. In the event of propeller failure or fragmentation, the ballistic shield prevents high-velocity debris from penetrating the fuselage and damaging vital internal systems or injuring occupants. This localized shielding offers an effective safety solution without requiring full fuselage coverage, thus optimizing material use and weight. Since the ballistic shield is positioned inside the fuselage, it does not alter the external aerodynamic profile of the aircraft. This eliminates concerns about increased drag or disrupted airflow, which are common disadvantages of external shielding. By maintaining the fuselage's smooth outer surface, the aircraft's overall performance are preserved, allowing for optimized flight characteristics without the need for additional aerodynamic compensations.

The placement of the ballistic shield adjacent to the propeller ensures that protection is provided exactly where it is needed, without adding excessive weight to other, lower-risk sections of the fuselage. This contributes to optimized weight distribution and prevents unnecessary structural burden on the aircraft. As the shield is located near the aircraft's centre of mass, particularly in configurations where the propeller is mounted at the front or rear of the fuselage, this minimizes its impact on the aircraft's balance and handling characteristics, ensuring stable flight performance. The installation of the ballistic shield on the inner surface of the fuselage allows for protection without encroaching on external space or adding to the fuselage's external dimensions. The shield can be seamlessly integrated into the existing frame and stringer structure of the fuselage, maintaining the original layout and internal configuration of the aircraft. Integrating the ballistic shield adjacent to the propeller takes advantage of the primary fuselage structure (i.e., frames and stringers), which provides additional support and reinforcement for the shield. The elements of the primary fuselage structure assist in dissipating impact forces, thereby enhancing the overall structural integrity of the aircraft in the event of high-energy collisions or debris strikes. The ballistic shield serves as an additional layer of defense, preventing damage to critical components (such as fuel systems, avionics, or hydraulic lines) that are often located in or near the fuselage segment adjacent to the propeller. As a further advantage this embodiment of the invention provides a cost-effective means of achieving high-level protection by focusing the ballistic shielding on the most vulnerable areas of the aircraft. By limiting shield placement to the segment adjacent to the propeller, material usage and manufacturing costs are minimized compared to full-fuselage shielding solutions. The modular nature of the shield plates, which can be installed between frame members and stringers, allows for efficient production and standardized installation, reducing complexity in the manufacturing and assembly process. The ability of the ballistic shield to protect the fuselage segment adjacent to the propeller is highly adaptable, making it suitable for various aircraft configurations, including pusher (propeller at the rear) and tractor (propeller at the front) designs. Whether the propeller is located at the front or rear of the fuselage, the shield can be positioned accordingly to provide optimal protection. This flexibility in placement allows for using the invention across a wide range of propeller-driven aircraft regardless of the propeller configuration.

Advantageous embodiments and further developments are apparent from the further dependent claims and from the description with reference to the figures.

According to an embodiment of the invention, the ballistic shield partially or fully covers the inner surface of the fuselage section in the circumferential direction. Covering the inner surface of the fuselage either partially or fully in the circumferential direction has the advantage that the ballistic shield provides protection to critical areas of the aircraft fuselage. Therein a full circumferential shield ensures that the entire fuselage section is shielded from potential impacts, such as those caused by propeller debris, ice shedding, or other external threats. In configurations where partial coverage is sufficient, the shield can be strategically positioned to protect high-risk areas, such as those adjacent to the propeller, while leaving low-risk areas uncovered. This targeted protection balances safety and weight, ensuring that protection is optimized without unnecessary material use. The ability to partially or fully cover the fuselage section allows for significant flexibility in the design and application of the ballistic shield. Depending on the specific safety requirements, the shield can be customized to different aircraft designs and vulnerable areas, ensuring that protection is tailored to the particular operational environment of the aircraft. This has the further advantage that the ballistic shield can be adapted to a wide range of fuselage geometries, ensuring that coverage can be optimized for both standard and non-standard fuselage designs, including those with complex curves or variations in diameter.

According to an embodiment of the invention, the ballistic shield covers between 80 and 20 %, in particular between 60 and 30%, preferably 40% of an area of opposing inner surfaces of the fuselage section in the circumferential direction of the fuselage This has the advantage that selective coverage of opposing inner surfaces of the fuselage in the circumferential direction allows for targeted protection in the areas most vulnerable to external threats, such as debris from propeller failures, ice shedding, or other high-energy impacts. This design allows for avoiding unnecessary full circumferential coverage, focusing protection where it is most needed. By covering critical sections (e.g., areas adjacent to the propeller or engine), the ballistic shield ensures high levels of safety while allowing less vulnerable parts of the fuselage to remain unshielded. Covering only 20% to 80% of the inner surface of the fuselage, and preferably around 40%, allows for a reduction in weight compared to a fully circumferential ballistic shield thereby maintaining the aircraft's performance characteristics. The partial coverage also allows for optimized material usage, reducing costs related to manufacturing, installation, and maintenance while still providing effective protection against potential threats. The flexible coverage range of 20% to 80%, and particularly 40%, provides a high degree of adaptability to different fuselage configurations. This means the ballistic shield can be tailored to protect specific fuselage sections depending on the layout and risk profile of the aircraft. In propeller-driven aircraft, for instance, this range allows the shield to be focused on sections adjacent to the propeller arc, where the likelihood of impact from blade-off events or debris is higher, while avoiding unnecessary coverage in low-risk areas. The partial coverage design has the additional advantage that installation process is simplified by allowing fewer ballistic shield panels to be integrated into the fuselage, reducing the time and labour required for installation.

According to a further embodiment of the invention each ballistic shield has a curvature with a radius of the curvature in the circumferential direction corresponding to a respective radius of curvature of the aircraft fuselage section covered by the ballistic shield.

This has the advantage that the customized curvature of the ballistic shield allows for precise and seamless integration into the aircraft's structure. This ensures that the shield conforms perfectly to the internal surface of the fuselage, avoiding any gaps or misalignments that could reduce its protective effectiveness. This customized fit also ensures that the shield integrates with the elements of the primary structure of the fuselage. By conforming to the curvature of the fuselage, the ballistic shield helps maintaining the aerodynamic efficiency of the aircraft. Although the ballistic shield is mounted on the inner surface of the fuselage, its shape can still affect the distribution of loads and vibrations, which could impact flight performance. Additionally, the curved shield reduces the risk of creating stress concentrations or points of structural weakness, which could arise if the shield did not match the fuselage curvature. The ballistic shield's curved shape, corresponding precisely to the fuselage, allows for easier installation, as the shield can be directly mounted onto the fuselage section without requiring extensive adjustments or special mounting structures. This reduces the complexity and time involved in installation during manufacturing or retrofitting processes.

According to a further embodiment of the invention, the frames are configured as T-profiles with the ballistic shield being attached to legs of the T-profiles extending in the interior space of the fuselage. This has the advantage that attaching the ballistic shield to the legs of the T-profiles provides a stable and secure mounting point, ensuring that the shield is firmly anchored within the fuselage. By connecting the ballistic shield to T-profiles of the frame members, the shield becomes an integral part of the overall load-bearing system of the fuselage, contributing to increased structural integrity. The T-profile configuration ensures that loads from the ballistic shield, such as impact forces or vibrations, are distributed evenly across the frame structure. The vertical leg of the T-profile efficiently transfers these loads to the fuselage, while the horizontal leg provides a wide attachment surface for the ballistic shield, resulting in uniform stress distribution.

This load-sharing design enhances the durability of both the ballistic shield and the fuselage structure, ensuring that localized stresses are minimized, reducing the likelihood of structural fatigue or failure over time. The horizontal legs of the T-profile extending into the interior space of the fuselage provide a simple and accessible attachment surface for the ballistic shield. This allows for straightforward installation of the shield, as it can be securely fastened directly to the T-profiles without requiring complex brackets or mounting systems. The easy access to the T-profile legs during assembly also facilitates quick installation and maintenance, reducing the overall labour and time required for manufacturing or retrofitting the ballistic shield onto the aircraft. T-profile legs ensure that shields can be securely fixed to the fuselage, allowing for customization based on the specific protection requirements of the aircraft.

According to a further embodiment of the invention in a longitudinal direction of the fuselage, the ballistic shield is supported on the stringers. Since stringers are critical components that run along the longitudinal axis of the fuselage, providing rigidity and structural integrity by reinforcing the aircraft's skin, supporting the ballistic shield on the stringers has the advantage that the shield benefits from the existing strength and stiffness of the fuselage structure, ensuring that it is securely anchored and well-supported against potential impacts. The stringers distribute mechanical loads from the ballistic shield along the entire length of the fuselage, ensuring even load distribution and reducing the risk of localized stresses or weaknesses that could otherwise compromise the fuselage's structural integrity. The stringers, running longitudinally, act as reinforcing beams that absorb and distribute impact forces along the length of the fuselage. When the ballistic shield is supported by the stringers, it benefits from this efficient load-sharing mechanism, allowing the fuselage to better withstand high-energy impacts, such as those from propeller debris or external projectiles. This distributed load path minimizes the concentration of stress in any one area, helping to preserve the integrity of both the fuselage and the ballistic shield. This makes the fuselage better able to withstand repeated impacts over time, contributing to the durability of the aircraft.

According to a further embodiment of the invention, edges of the ballistic shield facing the frames are provided with profiled rails, in particular U-profiled rails, with the ballistic shield being secured to the frames by fixation means, in particular rivets or screws, extending through the profiled rails and the frames. This has the advantage that the use of profiled rails, particularly U-profiled rails, along the edges of the ballistic shield allows for secure and stable attachment to the frames. The rails enhance structural rigidity and ensure precise alignment with the frames. By utilizing fixation means, such as rivets or screws, extending through the profiled rails and frames, the ballistic shield is firmly secured, providing improved load distribution and easy installation while maintaining the integrity and durability of the attachment. This design ensures a robust connection between the shield and the fuselage structure.

According to a further embodiment of the invention two or more ballistic shields are provided between at least two adjacent frames of the fuselage section. This has the advantage of modularity and flexibility by providing two or more ballistic shields between adjacent frames. This allows for customizable coverage, enabling the shields to be tailored to specific protection needs. It also simplifies installation, maintenance, and replacement, as individual shields can be installed or replaced independently without requiring removal of the entire shielding system. Additionally, the use of multiple shields enhances load distribution across the frames, improving the overall structural integrity and durability of the fuselage section.

According to a further embodiment of the invention the ballistic shield is provided as a shield assembly comprising two or more ballistic shields arranged in a circumferential direction of the fuselage and wherein adjacent ballistic shields are connected via connection means provided in edges of the ballistic shields facing each other. This has the advantage that the ballistic shield assembly, comprising two or more shields arranged in the circumferential direction, allows for modular and flexible protection, enabling coverage to be adjusted to the specific needs of the fuselage. The connection means between adjacent shields ensure a secure and stable connection, forming a continuous protective barrier without gaps. This design simplifies installation and replacement of individual shields and enhances structural integrity by distributing impact forces evenly across the connected shields. Additionally, it allows for customization to various fuselage geometries, ensuring adaptable and effective protection.

According to a further embodiment of the ballistic shield of the invention each plate has a curvature in the circumferential direction with a radius of the curvature corresponding to a respective radius of curvature of an aircraft fuselage section. This has the advantage of precise fit and integration by ensuring that each ballistic shield plate has a curvature corresponding to the radius of curvature of the fuselage section. This allows the shield to conform seamlessly to the fuselage's inner surface, ensuring full and even coverage without gaps. The curvature enhances the structural integrity of the shield, improving its ability to absorb and distribute impact forces effectively.

According to a further embodiment of the ballistic shield of the invention, the plate consists of or comprises an energy absorbing material, in particular a metal material, a carbon or glass fibre reinforced plastic material or a plastic material, preferably an ultra-high molecular weight polyethylene material, or mixtures thereof. This has the advantage that by utilizing energy-absorbing materials in the ballistic shield plate these materials provide high impact resistance and effectively absorb and dissipate energy from debris or ballistic impacts, thereby enhancing protection. The use of lightweight materials, such as fibre-reinforced plastics or UHMWPE, reduces the overall weight of the shield, improving fuel efficiency and aircraft performance without compromising safety. The flexibility to use different materials or combinations allows for customization based on specific threat levels and operational requirements.

According to a further embodiment of the aircraft of the invention a rotation of the propeller defines a potential area of impact on the fuselage and wherein in a longitudinal direction of the fuselage the ballistic shield covers the potential area of impact. This has the advantage of ensuring that the ballistic shield is positioned to cover the potential area of impact on the fuselage, as defined by the rotation of the propeller. This targeted coverage provides effective protection against debris, such as propeller blade fragments or ice shedding, which are likely to impact the fuselage in this specific zone. By focusing the ballistic shield on the longitudinal area where impacts are most probable, the design maximizes safety while minimizing unnecessary weight and material use. Additionally, this placement enhances aircraft durability, reducing the risk of damage to critical systems or passenger areas located within the fuselage section adjacent to the propeller.

The invention will be explained in greater detail with reference to exemplary embodiments depicted in the drawings as appended.
- Fig. 1: schematically depicts a perspective view of a section of a fuselage according to an embodiment of the invention;
- Fig. 2: schematically depicts a sectional view of a ballistic shield according to an embodiment of the invention;
- Fig. 3: schematically depicts a sectional view of a fuselage according to an embodiment of the invention;
- Fig. 4: schematically depicts a sectional view of a fuselage according to a further embodiment of the invention; and
- Fig. 5: schematically depicts an aircraft according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

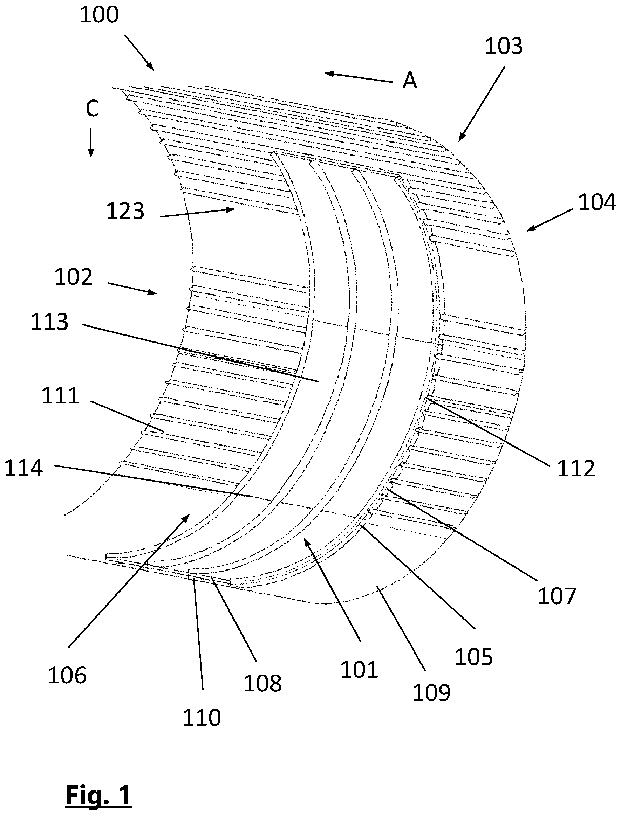

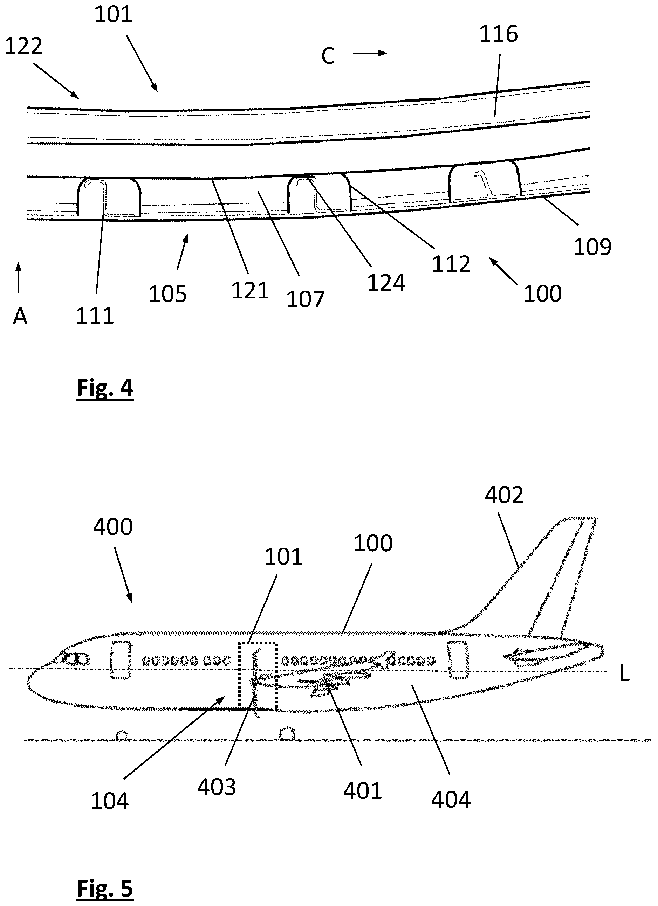

Fig. 1 schematically depicts a perspective view section of a fuselage 100 according to an embodiment of the invention. In the embodiment ballistic shields 101 are mounted on the inner surface 102 of the fuselage 100, covering a specific longitudinal section 103 of the fuselage 100. These ballistic shields 101 are strategically positioned to cover a potential impact area 104, which is defined by the rotation of the propeller 403 (cf. Fig. 5). This arrangement provides targeted protection against debris, such as fragments from a broken propeller blade or ice shedding. The propellers 403 are not shown in the figure as they are located behind the depicted fuselage section. The frames 105 of the fuselage 100 are configured as T-profiles or T-frames, extending into the interior space 106 of the fuselage 100. The ballistic shields 101 are attached to the legs 107 of the T-frames 105, providing a secure and stable mounting system. This configuration ensures even load distribution in the event of an impact, enhancing the structural integrity of the fuselage 100. A space 108 is provided between the ballistic shields 101 and the outer shell 109 of the fuselage 100, ensuring that the ballistic shields 101 are not placed directly on the outer shell 109. This offset space 108 is created because the ballistic shields 101 are attached to the T-frames 105, and the lower legs 110 of the T-frames 105 are riveted to the fuselage outer shell 109, thereby providing the space 108. The space 108 can be filled e.g. with insulating material.

Stringers 111, which run in the longitudinal direction A of the fuselage 100, are guided through mouse hole openings 112 in the T-frames 105 and extend underneath the ballistic shields 101. The ballistic shields 101 are supported by these stringers 111, ensuring proper alignment. The stringers 111 contribute to efficient load transfer, distributing the forces generated by an impact across the fuselage structure.

Several ballistic shields 101 are connected and extend over a portion of the circumferential surface 102 of the fuselage 100, but they do not cover the entire circumferential area. This arrangement allows for targeted protection in the high-risk areas while optimizing weight and material usage. In the longitudinal direction A of the fuselage 100, three ballistic shields 101, each consisting of three curved plates 113, are positioned between the frames 105. This modular configuration provides comprehensive coverage of the potential impact area 104 on the outer shell 109 of the fuselage, while allowing for efficient installation, maintenance, and replacement of individual plates 113 as needed. In a circumferential direction C the plates 113 forming the ballistic shields 101 are connected via their plate edges 114 facing each other by means or rails or profiles allowing for secure and fixed connection of the plates 113. Thus, the ballistic shields 101 are designed with a curvature that corresponds to the curvature of the fuselage 100 in the circumferential direction C. This ensures a precise fit of the ballistic shields 101 adjacent to the circumferential surface 102 of the fuselage 100, providing full coverage in the potential impact areas 104 while maintaining seamless integration with the aircraft's structural contours.

The ballistic shields 101 can be provided in specific longitudinal sections 103 and/or circumferential sections 123 of the fuselage 100, depending on the protection requirements dictated by the aircraft 400 (cf. Fig. 5) configuration. For instance, in a propeller-driven aircraft 400, the ballistic shield 101 may be installed only in the potential impact area 104 defined by the rotation of the propeller 403, where there is a higher risk of damage from debris or blade failure. This selective installation allows for targeted protection while optimizing weight and material usage, ensuring that the aircraft 400 remains efficient and safe without unnecessary reinforcement in low-risk areas.

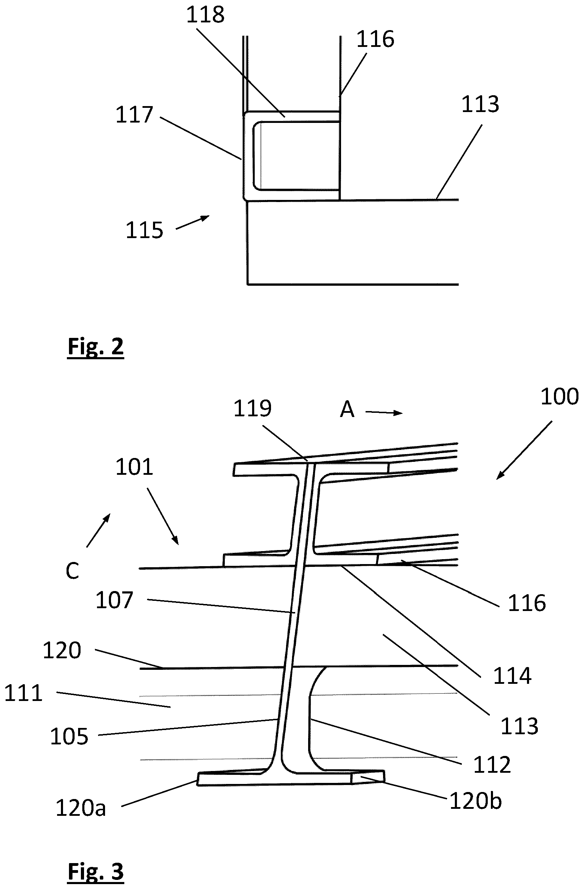

Fig. 2 schematically depicts a sectional view of a ballistic shield 101 according to an embodiment of the invention. Fig. 2 shows the shield edge 115 portion of a ballistic shield 101 prior to insertion between the frames 105 of a primary structure of an aircraft fuselage 100. The ballistic shield 101 is formed by a plate 113 or plate like structure having a curvature that corresponds to the curvature of an aircraft outer shell 109 or fuselage 100. In the shield edge 115 portion of the plate 113 a U-shaped profile 116 is connected to the plate 113. The U-shaped profile 116 enables connection of the ballistic shield 101 with the frames 105 of the primary structure. Fixation means (not shown) can extend through the base leg 117 of the U-shaped profile 116, extending in a vertical direction in the embodiment depicted in Fig. 2 and the vertical leg 107 of the T-shaped frame 105 (cf. Fig. 3) and hence secure the ballistic shield 101 to the primary structure. After installation, the upper leg 118 of the U-shaped profile 116 is positioned flush with the upper end 119 of the T-shaped frame 105 of the primary structure that extends in the interior of the fuselage 100 (cf. Fig. 1 and 3).

Fig. 3 schematically depicts a sectional view of a fuselage 100 according to an embodiment of the invention. The figure illustrates a fuselage 100 structure, showing a T-frame 105 extending in the circumferential direction C of the fuselage 100 and its interaction with ballistic shields 101. The T-frame 105 has a vertical leg 107 and two horizontal legs 120a, b that serve the purpose of connecting the primary structure to the aircraft outer shell 109 (not shown) by means of riveting. The ballistic shields 101 abutting the vertical leg 107 from both sides are mounted onto the vertical leg 107 via U-shaped profiles 116 attached to an edge 114 portion of the ballistic shields 101 or plates 113 forming part of the ballistic shield 101. The U-shaped profiles 116 are attached to the side shield edges 115 of the ballistic shields 101, ensuring secure fixation to the vertical leg 107 of the T-frame 105. These U-shaped profiles 116 allow the ballistic shields 101 to be securely anchored to the T-frame 105 using e. g. screws or rivets, which extend through the U-shaped profiles 116 and the vertical leg 107 of the T-frame 105. This configuration ensures that the ballistic shields 101 are firmly attached to the primary structure of the fuselage 100. The primary structure of the fuselage 100 provides a plurality of T-frames 105 extending in a circumferential direction C of the fuselage 100 positioned with a distance in a longitudinal direction A of the fuselage 100. The space between two adjacent T-frames 105 (cf. fig. 1) is used to insert the ballistic shields 101.

The figure also shows stringers 111 that extend in the longitudinal direction A of the fuselage 100, passing through the vertical leg 107 of the T-frame 105 underneath the ballistic shield 101. The vertical leg 107 is provided with mouse hole openings 112 allowing the passage of the stringers 111. These stringers 111 add structural support along the length of the fuselage 100 and contribute to the overall rigidity of the fuselage structure. The ballistic shields 101 are positioned in such a way that their side shield edges 115 abut the T-frame 105, creating a modular assembly of the shields 101 along the fuselage 100 while the plate surface 120 facing the outer shell 109 of the fuselage 100 rest on or abut to the stringers 111. The plates 113 forming part of the ballistic shield 101 are attached to a U-shaped profile 116, by means depending on shielding material. The U-shaped profile 116 is riveted to the frame 105 and acts as an inner frame flange, as well. The U-shaped profiles 116 ensure a rigid connection between the ballistic shields 101 and the T-frame 105, with screws or rivets providing long-lasting fixation. By securing the ballistic shields 101 to the vertical leg 107 of the T-frame 105, impact forces are evenly distributed across the fuselage structure. The stringers 111 running in the longitudinal direction of the fuselage 100 provide additional structural integrity, enhancing the fuselage's resistance to both longitudinal stresses and impacts.

Fig. 4 schematically depicts a sectional view of a fuselage 100 according to a further embodiment of the invention. Fig. 4 represents a cross-sectional view of the fuselage 100 seen from the longitudinal direction A. Fig. 4 illustrates the ballistic shield 101 mounted to a T-frame 105. Both the ballistic shield 101 and the T-frame 105 feature a curvature that corresponds to the curvature of the fuselage 100, ensuring seamless integration with the fuselage structure.

The T-frame 105 extends in the circumferential direction C of the fuselage 100 and provides structural support for the ballistic shield 101. The ballistic shield 101 is attached to the vertical leg 107 of the T-frame 105 by means of U-shaped profiles 116, which secure the shield 101 to the frame 105 using fixation elements such as screws or rivets (not shown). The vertical leg 107 of the T-frame 105 extends until the upper plane 122 of the U-shaped profile 116 and allows a flush arrangement of the profile 116 with respect to the vertical leg 107. The ballistic shield 101 is inserted within the primary structure and attached via the U-shaped profiles 116 provided on both edges 115 of the ballistic shield 101 or the plate 113 forming part of the ballistic shield 101 to be positioned between two adjacent T-frames 105 of the primary structure of the fuselage 100.

Additionally, mousehole openings 112 are provided in the T-frame 105 to allow stringers 111 to pass through the frame 105. These stringers 111 extend in the longitudinal direction A of the fuselage 100, providing additional structural reinforcement along the length of the fuselage 100. The lower plate surface 121 area of the ballistic shield 101 facing the aircraft outer shell 109 abuts to the stringers 111 and is thus positioned with a distance to the outer shell 109 providing a space 108 that can be used for implementing e.g. insulating material between the outer shell 109 and the ballistic shield 101. A layer of a shock-absorbing or damping material can be provided between the stringers 111 and the ballistic shield 101 to absorb vibration or shock impact on the ballistic shield 101.

Fig. 4 highlights the structural integration of the ballistic shield 101 with the T-frame 105 and stringers 111, ensuring both impact protection and load distribution in critical areas of the fuselage 100. The modular nature of the shield assembly (cf. Fig. 1) allows for efficient installation and maintenance, while the precise curvature of the components ensures optimal internal space preservation.

Fig. 5 schematically depicts an aircraft 400 according to an embodiment of the invention. The aircraft 400 is configured as a propeller aircraft having a fuselage 100, wings 401, tail section 402, and propellers 403 positioned in front of the wings 401. The aircraft fuselage 100 includes a ballistic shield 101, as indicated by the box in the figure, which is mounted on the inner surface 102 of the fuselage 100 in the potential impact area 104 resulting from a rotation of the propeller 403. This ballistic shield 101 is strategically positioned to protect the fuselage 100 and its internal components from potential damage caused by debris or fragments that may be ejected from the propeller 403 in the event of failure or ice formation. By mounting the ballistic shield 101 inside the fuselage 100 the outer aerodynamic surface 404 of the fuselage 100 remains smooth and uninterrupted, ensuring minimal drag and maintaining optimal fuel efficiency and aircraft performance. An internally mounted ballistic shield 101 is protected from environmental factors such as rain, ice, wind, and corrosion, ensuring long-term durability. The internal mounting allows the ballistic shield 101 to be securely integrated with the elements of the fuselage primary structure, such as T-profiled frames 105 and stringers 111, ensuring even load distribution and enhancing the structural integrity of the aircraft 400. Internal mounting also contributes to better weight distribution along the aircraft's longitudinal axis L, preserving handling characteristics and balance. An internally mounted ballistic shield 101 is easier to access for maintenance and inspection, reducing downtime and maintenance costs. The internal ballistic shield 101 provides targeted protection in the potential impact area 104 defined by the rotation of the propeller 403 while optimizing aerodynamics, structural integrity, and efficiency.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: fuselage
- 101: ballistic shield
- 102: surface
- 103: longitudinal section
- 104: potential impact area
- 105: T-frame
- 106: interior space
- 107: leg
- 108: space
- 109: outer shell
- 110: lower leg
- 111: stringer
- 112: mouse hole opening
- 113: plate
- 114: plate edge
- 115: shield edge
- 116: U-shaped profile
- 117: base leg
- 118: upper leg
- 119: upper end
- 120a, b: horizontal leg
- 121: plate surface
- 122: upper plane
- 123: circumferential section
- 124: layer
- 400: aircraft
- 401: wings
- 402: tail section
- 403: propeller
- 404: aerodynamic surface

- A: longitudinal direction
- C: circumferential direction
- L: longitudinal axis

## Claims

1. Aircraft fuselage (100), in particular of an open fan propeller aircraft (400), comprising a primary structure having frame (105) members extending in a circumferential direction (C) of the fuselage (100) and stringers (111) extending in a longitudinal direction (A) of the fuselage (100) and a ballistic shield (101) covering an inner surface of a longitudinal section (123) of the fuselage, wherein the ballistic shield (101) is inserted between adjacent frame (105) members of the primary structure and extends in a longitudinal direction (A) and a circumferential direction (C) of the fuselage (100) section.

2. Aircraft fuselage (100) according to claim 1, wherein the ballistic shield (101) partially or fully covers the inner surface (103) of the fuselage section in the circumferential direction (C).

3. Aircraft fuselage (100) according to claim 1 or 2, wherein the ballistic shield (101) covers between 80 and 20 %, in particular between 60 and 30%, preferably 40% of an area of opposing inner surfaces (103) of the fuselage (100) section in the circumferential direction (C) of the fuselage (100).

4. Aircraft fuselage (100) according to claim 1 or 2, wherein in the circumferential direction (C) each ballistic shield (101) has a curvature with a radius of the curvature corresponding to a respective radius of curvature of the aircraft fuselage (100) section covered by the ballistic shield (101).

5. Aircraft fuselage (100) according to any of claims 1 to 3, wherein the frames (105) are configured as T-profiles with the ballistic shield (101) being attached to legs (107) of the T-profiles extending in the interior space (106) of the fuselage (100).

6. Aircraft fuselage (100) according to any one of claims 1 to 4, wherein in a longitudinal direction (A) of the fuselage (100), the ballistic shield (101) is supported on the stringers (111).

7. Aircraft fuselage (100) according to any one of claims 1 to 5, wherein edges (115) of the ballistic shield (101) facing the frames (105) are provided with profiled rails, in particular U-shaped profiles (116) , with the ballistic shield (101) being secured to the frames (105) by fixation means, in particular rivets or screws, extending through the profiled rails and the frames (105).

8. Aircraft fuselage (100) according to any one of claims 1 to 7, wherein two or more ballistic shields (101) are provided between at least two adjacent frames (105) of the fuselage section.

9. Aircraft fuselage (100) according to any one of claims 1 to 8, wherein the ballistic shield (101) is provided as a shield assembly comprising two or more ballistic shields (101) arranged in a circumferential direction (C) of the fuselage (100) and wherein adjacent ballistic shields (101) are connected via connection means provided in edges (114) of the ballistic shields (101) facing each other.

10. Ballistic shield (101) for use on an inner surface (103) of an aircraft fuselage (100) according to any one of claims 1 to 9, wherein the ballistic shield (101) is configured as a rectangular plate (113) with profiled rails, in particular U-shaped profiles (116) being provided at at least two opposing edges (115) of the ballistic shield (101).

11. Ballistic shield (101) according to claim 10, wherein each plate (113) has a curvature in the circumferential direction (C) of the fuselage (100) with a radius of the curvature corresponding to a respective radius of curvature of an aircraft fuselage (100) section.

12. Ballistic shield (101) according to claim 10 or 11, wherein the plate (113) consists of or comprises an energy absorbing material, in particular a metal material, a carbon or glass fibre reinforced plastic material or a plastic material, preferably an ultra-high molecular weight polyethylene material, or mixtures thereof.

13. Ballistic shield (101) assembly comprising a plurality of ballistic shields (101) according to any of clams 10 to 12, wherein the ballistic shields (101) are arranged adjacent to each other and connected via connection means provided in edges (114) of the ballistic shields (101) facing each other.

14. Aircraft (400) having a fuselage (100) according to any one of claims 1 to 9, wherein the aircraft (400) is a propeller aircraft, in particular an open fan propeller aircraft or turboprop aircraft, and wherein the ballistic shield (101) is positioned on the inner surface (103) of the fuselage (100) in a section of the fuselage (100) adjacent to the propeller (403).

15. Aircraft (400) according to claim 14, wherein a rotation of the propeller (403) defines a potential impact area (104) on the fuselage (100) and wherein in a longitudinal direction (A) of the fuselage (100) the ballistic shield (101) at least covers the potential impact area (104).
